# EUROPÄISCHE PATENTANMELDUNG

(11) **EP 4 032 681 A1**
(43) Veröffentlichungstag der Anmeldung: **27.07.2022**
(21) Anmeldenummer: 22150909.4
(22) Anmeldetag: 11.01.2022
(51) Int. Cl.: B29C 48/76, B29C 48/80, B29B 7/84, B29B 17/00, B29C 48/53

(54) **EXTRUDER UND VERFAHREN ZUR HERSTELLUNG VON KUNSTSTOFFTEILEN**

(30) Priorität: 17.01.2021 DE 202021000153 U
(71) Anmelder: Stichting Aandelen Beheer Henk Reinders, 49846 Hoogstede (DE); Reinders, Helga, 49846 Hoogstede (DE)
(72) Erfinder: Reinders, Henk, 49846 Hoogstede (DE)
(74) Vertreter: Dr. Binder & Binder GbR

(57) **Zusammenfassung**

Es wird ein Extruder (1) zur Herstellung von Kunststoffteilen aus Recyclingmaterial vorgestellt, der einen mit einer Heizeinrichtung (2) ausgestatteten Gehäusezylinder (3) umfasst, in dem eine mit einem Antrieb (4) gekoppelte Extruderschnecke (5) drehbar gelagert ist, wobei ein Einlass (6) der Zuführung der zu verarbeitenden Grundstoffe (7) in den Gehäusezylinder (3) dient und endseitig der Extruderschnecke (5) eine Spritzdüse (8) zur Abgabe des flüssigen Kunststoffes vorhanden ist. Erfindungsgemäß weist der Gehäusezylinder (3) mindestens eine Ablauföffnung (9) für die Abführung von Feuchtigkeit und wenigstens eine Verdampfungsöffnung (10) für die Abgabe sich bei der Kunststoffverarbeitung ausbildender Feuchtigkeitsdämpfe auf.

Ferner betrifft die Erfindung ein Verfahren zur Herstellung von Kunststoffteilen aus Kunststoff-Recyclingmaterial als Grundstoff (7) mit einem derartigen Extruder (1).

## Beschreibung

Die Erfindung betrifft einen Extruder sowie ein Verfahren zur Herstellung von Kunststoffteilen mit einem derartigen Extruder.

Extruder zur Herstellung von Kunststoffteilen sind in unterschiedlichen Ausführungen bekannt. Sie weisen im Allgemeinen eine Heizeinrichtung auf, die dem Aufschmelzen der zu verarbeitenden Grundstoffe in einem Gehäusezylinder dient. In dem Gehäusezylinder ist dabei stets eine mit einem Antrieb gekoppelte Extruderschnecke drehbar gelagert, wobei ein Einlass der Zuführung der zu verarbeitenden Grundstoffe in den Gehäusezylinder dient und endseitig der Extruderschnecke eine Spritzdüse zur Abgabe des flüssigen Kunststoffes vorhanden ist. Die Spritzdüsen kann dabei Bestandteil eines Umformwerkzeuges sein.

Ein derartiger Extruder verfügt über eine Einzugszone mit dem Einlass, über den die Grundstoffe, bei denen es sich in der Regel um ein Granulat oder ein Pulver handelt, in den Gehäusezylinder eingebracht, darin verdichtet und mittels der Heizeinrichtung vorgewärmt werden. In der sich daran anschließenden Umwandlungszone wird aus dem Grundstoff eine Formmasse erzeugt, die überwiegend plastische Eigenschaften aufweist. Im Anschluss hieran wird der zu verarbeitende Werkstoff in der sogenannten Ausstoßzone homogenisiert, verdichtet und mit der im Extruder erzeugten Temperatur aus diesem ausgestoßen. Um einen endgültigen Übergang des auf diese Weise erzeugten Produkts in den festen Zustand zu erreichen, muss der entstandene Kunststoffstrang nach dem Passieren des Extruders gekühlt werden, was beispielsweise mit Luft oder Wasser möglich ist.

Ein grundsätzliches Ziel besteht zunehmend darin, einmal verwendete Kunststoffe einer erneuten Verwendung zuzuführen, was mit anderen Worten bedeutet, dass Kunststoffe in einem Extruder verarbeitet werden müssen, die aus der Abfallverwertung stammen und wiederverwertet werden sollen oder müssen. Dabei stellt sich das Problem, dass derartige Recyclingmaterialien häufig Bestandteile enthalten, die für die Herstellung eines reinen Kunststoffes störend sind. So sind beispielsweise bei Kunststoffbehältnissen häufig zusätzliche Metallbestandteile oder Lebensmittelreste vorhanden, die sich negativ bei der Verarbeitung auswirken können. Daher ist es bislang üblich, vor der erneuten Verwertung beziehungsweise Rückgewinnung eine aufwendige Trennung der einzelnen Bestandteile vorzunehmen und anschließend die für das Aufschmelzen im Extruder vorgesehenen Kunststoffteile mit viel Aufwand zu reinigen. Dies erfordert nicht nur sehr viel Arbeitszeit, sondern verschlingt auch Ressourcen, wie beispielsweise erhebliche Mengen Wasser.

Der Erfindung liegt die Aufgabe zugrunde, einen Extruder bereitzustellen, der in der Lage ist, lediglich grob vorgereinigte Grundstoffe zu einer formbaren Kunststoffmasse zu verarbeiten, die qualitativ hohen Anforderungen entspricht. Darüber hinaus ist ein Verfahren anzugeben, wie mit einem derartigen Extruder Kunststoffteile mit hoher Qualität hergestellt werden können.

Die Erfindung löst diese Aufgabenstellung mit den Merkmalen der unabhängigen Patentansprüche 1 und 10. Weitere Ausgestaltungen der Erfindung sind Gegenstand der sich jeweils anschließenden Unteransprüche.

Ein Extruder zur Herstellung von Kunststoffteilen aus Recyclingmaterial, der einen mit einer Heizeinrichtung ausgestatteten Gehäusezylinder umfasst, in dem eine mit einem Antrieb gekoppelte Extruderschnecke drehbar gelagert ist, wobei ein Einlass der Zuführung der zu verarbeitenden Grundstoffe in den Gehäusezylinder dient und endseitig der Extruderschnecke eine Spritzdüse zur Abgabe des flüssigen Kunststoffes vorhanden ist, wurde erfindungsgemäß dahingehend weitergebildet, dass der Gehäusezylinder mindestens eine Ablauföffnung für die Abführung von Feuchtigkeit und wenigstens eine Verdampfungsöffnung für die Abgabe sich bei der Kunststoffverarbeitung ausbildender Feuchtigkeitsdämpfe aufweist.

Mit der Erfindung wird es erstmals möglich, in einem Extruder nicht nur feines Granulat oder Pulver zu einem Kunststoff zu verarbeiten, sondern auch Recyclingmaterial, welches lediglich grob vorgereinigt werden muss. Dabei genügt es, das Material von metallischen Bestandteilen oder von Papierresten zu befreien, was auf einfache Weise durch eine grobe Zerkleinerung mit anschließender Metallabscheidung möglich ist. Der so vorbereitete Grundstoff wird nachfolgend in einem Wasserbad grob von Lebensmittel- und Papierresten befreit, sodass ihm zu diesem Zeitpunkt Feuchtigkeit in Form von Reinigungswasser anhaftet. Dies stellt für den erfindungsgemäßen Extruder jedoch kein Problem dar und beeinflusst nicht die Qualität des zu erzeugenden Kunststoffs, weil erfindungsgemäß der Gehäusezylinder mindestens eine Ablauföffnung, bevorzugt mehrere Ablauföffnungen, für die Abführung der Feuchtigkeit und wenigstens eine Verdampfungsöffnung, bevorzugt mehrere Verdampfungsöffnungen, zur Abgabe der sich bei der Kunststoffverarbeitung ausbildenden Feuchtigkeitsdämpfe aufweist. Über diese Ablauföffnungen und Verdampfungsöffnungen wird demnach die Feuchtigkeit aus dem Innenraum des Extruders abgeführt und kann folglich nicht bei der Verarbeitung in den Kunststoff gelangen. Damit gelingt mit einem erfindungsgemäßen Extruder ein qualitativ hochwertiger Kunststoff aus recyclebaren Grundstoffen.

Wie zuvor bereits ausgeführt wurde, stellt es einen wesentlichen Vorteil dar, wenn mehrere Ablauföffnungen in dem Gehäusezylinder vorhanden sind, über die Feuchtigkeit, insbesondere Wasser, abgeführt werden kann. Aus dem genannten Grund geht eine erste Ausgestaltung der Erfindung dahin, dass unterhalb des Gehäusezylinders ein Ablaufsieb angeordnet ist, das eine Vielzahl Ablauföffnungen aufweist.

Eine spezielle Weiterführung dieses Lösungsgedankens ist darüber hinaus darin zu sehen, dass unterhalb des Ablaufsiebes eine mit einem Ablauf ausgestattete Ablaufwanne zur Sammlung und Abführung der Feuchtigkeit angeordnet ist. Die Ablaufwanne sorgt dabei für die Sammlung der Feuchtigkeit und ihre Abführung über einen hierfür geeigneten Ablauf. An den Ablauf kann beispielsweise eine Ablaufleitung gekoppelt sein, in die eine Pumpe zur Abführung der Feuchtigkeit integriert ist.

Die Ablauföffnungen können bei der beschriebenen Lösung unterschiedlich gestaltet sein. Gemäß einer besonders bevorzugten Ausführungsvariante wird jedoch vorgeschlagen, dass die Ablauföffnungen als Schlitze mit einer Breite zwischen 1 mm und 7 mm, bevorzugt 5 mm, ausgeführt sind oder Bohrungen sind und einen Durchmesser von 1 mm bis 7 mm, bevorzugt 5 mm, aufweisen. Mit diesen Maßen lassen sich die Ablauföffnungen fertigungstechnisch einfach herstellen, sodass sich der Aufbau des Extruders insgesamt vereinfacht und dieser damit kostensparend ausgeführt ist.

Eine ähnliche Lösung ist erfindungsgemäß auch für die Verdampfungsöffnungen vorgesehen, sodass bevorzugt mehrere Verdampfungsöffnungen ein Sieb zur Abführung von Feuchtigkeitsdämpfen bilden und die einzelnen Verdampfungsöffnungen als Schlitze ausgeführt sind, deren Breite zwischen 0,3 und 0,7 mm, bevorzugt 0,5 mm, beträgt oder die Verdampfungsöffnungen als Bohrungen gestaltet sind und einen Durchmesser von 0,3 bis 0,7 mm, bevorzugt 0,5 mm, aufweisen.

Eine sehr vorteilhafte Ausgestaltung der Erfindung ist darüber hinaus darin zu sehen, dass der Durchmesser der Extruderschnecke einlassseitig zwischen 150 mm und 300 mm und spritzdüsenseitig zwischen 410 und 450 mm beträgt. Mit anderen Worten weist die Extruderschnecke einlassseitig einen geringeren Durchmesser auf, als auslassseitig. Durch diese Gestaltung erhöht sich der Druck bei der Erzeugung der Kunststoffformmasse innerhalb des Gehäusezylinders vom Einlass bis zum Auslass. Eine derartige Ausführung der Extruderschnecke hat den zusätzlichen Vorteil, dass durch den steigenden Druck innerhalb des Gehäusezylinders auch ein Temperaturanstieg zu verzeichnen ist, der sich positiv auf die Qualität des zu erzeugenden Kunststoffes auswirkt. Das Aufheizen des Kunststoffes innerhalb des Gehäusezylinders erfolgt selbstverständlich in an sich bekannter Weise über hierfür ausgelegte Heizeinrichtungen des Extruders.

Von besonderer Bedeutung ist entsprechend einer weiterbildenden Maßnahme der Erfindung auch, dass der Innendurchmesser des Gehäusezylinders zwischen 580 mm und 620 mm beträgt. Dabei wird der Innendurchmesser des Gehäusezylinders konstant gehalten. Im Zusammenhang mit den Ausführungen zuvor ergibt sich somit der bereits beschriebene Druckanstieg innerhalb des Gehäusezylinders bei der Herstellung der Kunststoffformmasse.

Je nach zu verarbeitendem Grundstoff können unterschiedliche Temperaturen innerhalb des Gehäusezylinders erforderlich sein. Als besonders vorteilhaft haben sich Temperaturen herausgestellt, die mittels der Heizeinrichtung einlassseitig zwischen 160°C und 200° C, vorzugsweise 180 °C, und spritzdüsenseitig zwischen 250° C und 320° C, vorzugsweise 280 °C bis 300 °C, betragen.

Durch die sich innerhalb des Extruders ausbildenden, hohen Drücke und Temperaturen unterliegen die einzelnen Bauteile einen erheblichen Verschleiß. Daher stellt es einen wesentlichen Vorteil für die Erhöhung der Lebensdauer des Extruders dar, wenn die Extruderschnecke aus Stahl besteht.

Das erfindungsgemäßen Verfahren zur Herstellung von Kunststoffteilen aus Kunststoff-Recyclingmaterial als Grundstoff mit einem zuvor beschriebenen Extruder ist durch folgende Verfahrensschritte gekennzeichnet:
- Trennung der metallischen und/oder der aus Papier bestehenden Bestandteile von dem Grundstoff,
- Grobreinigung der Grundstoffe mit Wasser,
- Einbringung der darüber hinaus unverarbeiteten Grundstoffe über den Einlass in den Extruder,
- Aufschmelzen der Grundstoffe zu einem pastösen oder flüssigen Kunststoff bei einer einlassseitigen Temperatur zwischen 160°C und 200° C und einer spritzdüsenseitigen Temperatur zwischen 250° C und 320° C, während in dem Grundstoff vorhandene Feuchtigkeit über mindestens eine Ablauföffnung und/oder wenigstens eine Verdampfungsöffnung des Gehäusezylinders abgeführt wird
- Abführung des flüssigen Kunststoffes über die Spritzdüse.

Das erfindungsgemäße Verfahren ist bestechend einfach gehalten und ermöglicht dennoch die Bereitstellung eines qualitativ hochwertigen Kunststoffprodukts, welches mit dem Extruder hergestellt wird. Eine aufwändige Vorreinigung der Grundstoffe, bei denen es sich um recyclingfähiges Material handelt, ist nicht mehr erforderlich. Auf diese Weise ist das Verfahren kostengünstig und spart neben wertvollen Ressourcen auch Arbeitszeit ein.

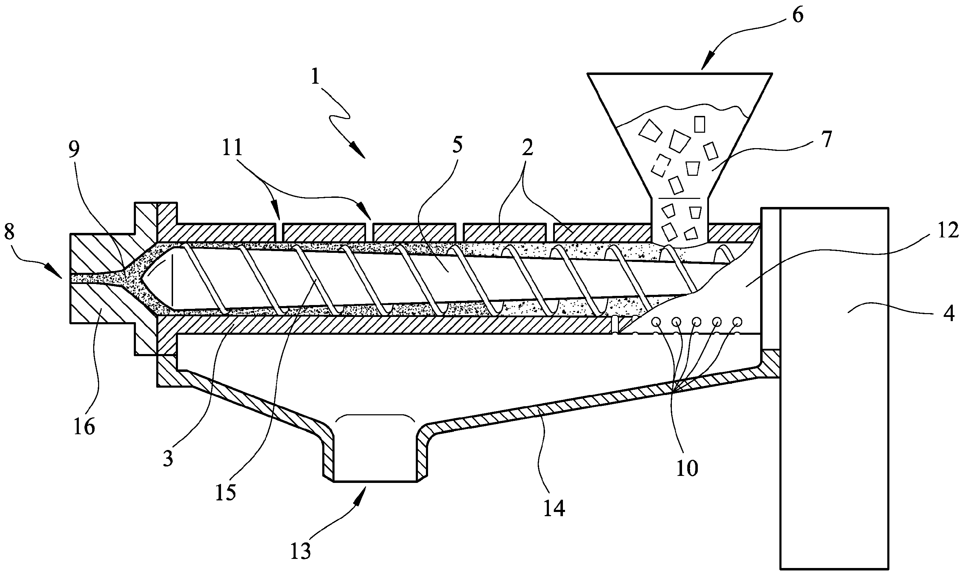

Die Erfindung wird nachfolgend anhand der beigefügten Zeichnung näher erläutert. Das gezeigte Ausführungsbeispiel stellt dabei keine Einschränkung auf die dargestellte Variante dar, sondern dient lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in der Figur nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Die Figur zeigt beispielhaft einen Extruder 1, dessen Gehäusezylinder 3 Heizeinrichtungen 2 aufweist, um den Grundstoff 7, der in den Gehäusezylinder 3 eingebracht wird, zu erwärmen und zu verflüssigen. In dem Gehäusezylinder 3 ist eine Extruderschnecke 5 drehbar gelagert. Die Extruderschnecke 5 wird mittels eines Antriebsmotors 4 in eine Rotationsbewegung versetzt, sodass die wendelförmigen Schneckengänge 15 der Extruderschnecke 5 den in den Gehäusezylinder 3 eingebrachten Grundstoff 7 von dem Einlass 6 zu der dem Einlass 6 gegenüberliegenden Spritzdüse 8, also zum Auslass, fördern. Bei dem Einlass 6 handelt es sich im dargestellten Beispiel um einen Einfülltrichter, in den die von Metallteilen und/oder Papierresten befreiten Grundstoffe 7, bei denen es sich allgemein um recyclingfähige Kunststoffe handelt, nach einer Grobreinigung mit Wasser eingefüllt werden. Durch die Reinigung mit Wasser sind die Grundstoffe 7 feucht. Die enthaltene Feuchtigkeit kann dabei die Qualität des herzustellenden Kunststoffprodukts mindern, sodass der in der Figur gezeigte, erfindungsgemäße Extruder 1 an seiner Unterseite ein Ablaufsieb 12 aufweist, welches mit einer Vielzahl Ablauföffnungen 10 ausgestattet ist. Über die Ablauföffnungen 10 kann die Feuchtigkeit in eine darunter befindliche Ablaufwanne 14 und von dieser ausgehend, über einen Ablauf 13 abgeführt werden. Durch die Heizeinrichtung 2 wird der in den Gehäusezylinder 3 eingebrachte Grundstoff 7 erwärmt, sodass die Feuchtigkeit im Laufe des Prozesses auch verdampft. Um auch diese Verdampfungsfeuchte wirksam aus dem Innenraum des Gehäusezylinders 3 abführen zu können, weist der Extruder 1 darüber hinaus eine Vielzahl Verdampfungsöffnungen 11 auf, die bei dem dargestellten Beispiel als Schlitze ausgeführt sind und sich im oberen Teil des Gehäusezylinders 3 zwischen den Elementen der Heizeinrichtung 2 befinden. Der Extruder 1 lässt sich grundsätzlich in drei, in Förderrichtung aufeinanderfolgende Zonen einteilen. Beginnend mit einer Einzugszone, die den Einlass 6 aufweist, über den die Grundstoffe 7 in den Gehäusezylinder 3 eingebracht werden, schließt sich daran eine etwa mittig gelegene Umwandlungszone an, in der aus dem Grundstoff 7 eine Formmasse erzeugt wird, die zunächst plastische Eigenschaften aufweist. Im Anschluss hieran wird der zu verarbeitende Kunststoff 9 in der sogenannten Ausstoßzone homogenisiert, verdichtet und mit der im Extruder 1 erzeugten Temperatur aus der Spritzdüse 8 ausgestoßen. Die Spritzdüse 8 stellt bei der gezeigten Ausführung einen Bestandteil eines Umformwerkzeuges 16 dar, durch das der Kunststoff 9 seine endgültige Form erhält. Um einen Übergang des auf diese Weise erzeugten Produkts in den festen Zustand zu erreichen, muss der entstandene Kunststoffstrang nach dem Passieren des Extruders 1 gekühlt werden, was beispielsweise mit Luft oder Wasser möglich ist.

### BEZUGSZEICHENLISTE:

- 1: Extruder
- 2: Heizeinrichtung
- 3: Gehäusezylinder
- 4: Antrieb (Motor)
- 5: Extruderschnecke
- 6: Einlass
- 7: Grundstoff
- 8: Spritzdüse
- 9: Kunststoff
- 10: Ablauföffnung
- 11: Verdampfungsöffnung
- 12: Ablaufsieb
- 13: Ablauf
- 14: Ablaufwanne
- 15: Schneckengang
- 16: Umformwerkzeug

## Patentansprüche

1. Extruder (1) zur Herstellung von Kunststoffteilen aus Recyclingmaterial, umfassend einen mit einer Heizeinrichtung (2) ausgestatteten Gehäusezylinder (3), in dem eine mit einem Antrieb (4) gekoppelte Extruderschnecke (5) drehbar gelagert ist, wobei ein Einlass (6) der Zuführung der zu verarbeitenden Grundstoffe (7) in den Gehäusezylinder (3) dient und endseitig der Extruderschnecke (5) eine Spritzdüse (8) zur Abgabe des flüssigen Kunststoffes (9) vorhanden ist,
**dadurch gekennzeichnet, dass**
der Gehäusezylinder (3) mindestens eine Ablauföffnung (10) für die Abführung von Feuchtigkeit und wenigstens eine Verdampfungsöffnung (11) für die Abgabe sich bei der Kunststoffverarbeitung ausbildender Feuchtigkeitsdämpfe aufweist.

2. Extruder nach Anspruch 1,
**dadurch gekennzeichnet, dass**
unterhalb des Gehäusezylinders (3) ein Ablaufsieb (12) angeordnet ist, das eine Vielzahl Ablauföffnungen (10) aufweist.

3. Extruder nach Anspruch 2,
**dadurch gekennzeichnet, dass**
unterhalb des Ablaufsiebes (12) eine mit einem Ablauf (13) ausgestattete Ablaufwanne (14) zur Sammlung und Abführung der Feuchtigkeit angeordnet ist.

4. Extruder nach einem der Ansprüche 2 oder 3,
**dadurch gekennzeichnet, dass**
die Ablauföffnungen (10) als Schlitze mit einer Breite zwischen 1 mm und 7 mm oder als Bohrungen mit einem Durchmesser von 1 mm bis 7 mm ausgeführt sind.

5. Extruder nach einem der vorstehend genannten Ansprüche,
**dadurch gekennzeichnet, dass**
mehrere Verdampfungsöffnungen (11) ein Sieb zur Abführung von Feuchtigkeitsdämpfen bilden und die einzelnen Verdampfungsöffnungen (11) als Schlitze mit einer Breite zwischen 0,3 und 0,7 mm oder als Bohrungen mit einem Durchmesser von 0,3 bis 0,7 mm ausgeführt sind.

6. Extruder nach einem der vorstehend genannten Ansprüche,
**dadurch gekennzeichnet, dass**
der Durchmesser der Extruderschnecke (5) einfüllseitig zwischen 150 mm und 300 mm und spritzdüsenseitig zwischen 410 und 450 mm beträgt.

7. Extruder nach einem der vorstehend genannten Ansprüche,
**dadurch gekennzeichnet, dass**
der Innendurchmesser des Gehäusezylinders (3) zwischen 580 mm und 620 mm beträgt.

8. Extruder nach einem der vorstehend genannten Ansprüche,
**dadurch gekennzeichnet, dass**
die Temperatur mittels der Heizeinrichtung (2) einlassseitig zwischen 160°C und 200° C und spritzdüsenseitig zwischen 250° C und 320° C beträgt.

9. Extruder nach einem der vorstehend genannten Ansprüche,
**dadurch gekennzeichnet, dass**
die Extruderschnecke (5) aus Stahl besteht.

10. Verfahren zur Herstellung von Kunststoffteilen aus Kunststoff-Recyclingmaterial als Grundstoff (7) mit einem Extruder (1) nach einem der vorstehend genannten Ansprüche,
**gekennzeichnet durch** die Verfahrensschritte:
- Trennung der metallischen und/oder der aus Papier bestehenden Bestandteile von dem Grundstoff (7),
- Grobreinigung der Grundstoffe (7) mit Wasser,
- Einbringung der darüber hinaus unverarbeiteten Grundstoffe (7) über den Einlass (6) in den Extruder (1),
- Aufschmelzen der Grundstoffe (7) zu einem pastösen oder flüssigen Kunststoff (9) bei einer einlassseitigen Temperatur zwischen 160°C und 200° C und einer spritzdüsenseitigen Temperatur zwischen 250° C und 320° C, während in dem Grundstoff (7) vorhandene Feuchtigkeit über mindestens eine Ablauföffnung (10) und/oder wenigstens eine Verdampfungsöffnung (11) des Gehäusezylinders (3) abgeführt wird,
- Abführung des flüssigen Kunststoffes (9) über die Spritzdüse (8).
